# FASCICULE DE BREVET EUROPEEN

(11) **EP 0 546 934 B1**
(45) Date de publication et mention de la délivrance du brevet: **19.07.1995**
(21) Numéro de dépôt: 92403334.3
(22) Date de dépôt: 09.12.1992
(51) Int. Cl.: F16L 57/00, F16L 1/024, H02G 9/06

(54) **Nappe d'enrobage de conduite dans une tranchée**
Ummantelung von Rohren in einem Graben
Jacket for wrapping around pipes in a trench

(30) Priorité: 13.12.1991 FR 9115490
(43) Date de publication de la demande: 16.06.1993
(73) Titulaire: FOURNIER S.A., F-77550 Limoges-Fourche (FR)
(72) Inventeur: Fournier, Christian, F-77550 Moissy-Cramayel (FR)
(74) Mandataire: Boutin, Antoine

(56) Documents cités:
- EP-A- 0 009 105
- EP-A- 0 069 543
- FR-A- 2 433 151
- FR-A- 2 538 076

## Description

L'invention concerne la mise en tranchées de conduites diverses telles que les câbles ou fourreaux pour le transport du gaz, de l'électricité, le passage de lignes téléphoniques ou de fibres optiques.

Il est nécessaire de protéger ces conduites dans les tranchées notamment dans les terrains hétérogènes, graveleux, caillouteux ou rocheux, contre les risques de déchirures, chocs ou occlusions qui pourraient être occasionnés par le contact des cailloux ou rochers contondants.

Dans ce but on remblaie généralement la tranchée avec du sable ou du sablon ou tout autre matériau homogène facilement compactable, par exemple du sablon ou du gravier fin, de manière à enrober les conduites et ainsi la protéger.

Cette méthode présente l'inconvénient d'être relativement onéreuse car la tranchée doit être remblayée sur toute sa largeur et sur une bonne partie de sa hauteur.

En moyenne, il faut prévoir 120 litres de remblai par mètre de tranchée ce qui représente d'importantes quantités à livrer sur le chantier donc un coût important et limite la productivité en raison des opérations de reprise que cela implique.

L'invention vise à limiter au minimum la quantité de matériau d'enrobage utilisée et à permettre une mécanisation de cette opération.

A cet effet, l'invention est matérialisée par une nappe déroulable constituée par deux supports souples assemblés entre eux de manière à former des réceptacles contenant un matériau d'enrobage en vrac tel que du sable ou du sablon.

De préférence les réceptacles forment des cordons disposés dans le sens longitudinal de la nappe. De préférence également les réceptacles forment des alvéoles en tronc de pyramides ou semi-circulaires.

Un tel produit peut être aisément mis en rouleaux pour être chargé sur un dévidoir fixé à l'arrière d'une machine de pose automatique de câble de type connu.

A l'aide d'un conformateur en forme d'entonnoir, la nappe peut être mise automatiquement autour de la conduite ou canalisation au fur et à mesure que celle-ci est posée dans la tranchée, la nappe étant ensuite fixée par tout moyen approprié tel que le collage, l'agrafage, la couture dans la tranchée elle-même.

Ainsi grâce à l'invention on peut limiter au minimun la quantité de matériau de remblai nécessaire pour protéger la conduite puisque celui-ci ne servira plus à combler partiellement la tranchée. En pratique on pourra limiter à quelques centimètres seulement (entre 2 et 5 cm) l'épaisseur de la couche de matériau nécessaire à la protection de la conduite, au lieu des 20 à 40 centimètres employés selon le procédé usuel.

D'autre part grâce à sa préfabrication et sa constitution en rouleaux, cette nappe d'enrobage peut être mise en oeuvre de manière mécanisée sans modification importante des appareils utilisés couramment sur les chantiers de pose de câbles ou de canalisations.

L'invention vise également un procédé de fabrication en continu d'une nappe d'enrobage telle que décrite ci-dessus. Ce procédé comporte les étapes suivantes :
- on déroule d'une feuille de matière souple telle qu'un géotextile non tissé, un film de polyane ou tout autre support similaire ;
- on dépose sur la feuille déroulée des cordons parallèles de matériau en vrac tels que du sable, du sablon, des déchets de polyéthylène expansé, longitudinalement dans le sens de déroutement de la feuille ;
- on recouvre les cordons de matériau d'une deuxième feuille souple, par exemple un film de polyéthylène ou de polyane, de telle sorte qu'elle vienne épouser le contour des cordons sans le modifier ;
- on solidarise ensemble les feuilles inférieure et supérieure le long des lignes de séparation entre les cordons ;
- on applique ensuite, perpendiculairement au sens de déroulement de la feuille, un outil diviseur qui a pour double fonction de fragmenter les cordons en blocs individuels sensiblement en forme de tronc de pyramide ou semi-circulaire, et d'appliquer par endroit la feuille supérieure sur la feuille inférieure pour les solidariser ensemble soit par soudure, soit par agrafage, soit par couture. Cette phase a en outre pour effet de compacter les blocs de matériau emprisonnés entre les deux feuilles et de les stabiliser ;
- on enroule enfin la nappe obtenue sur un mandrin pour former des rouleaux transportables facilement sur les lieux d'utilisation.

D'autres caractéristiques et avantages de l'invention ressortiront de la description qui va suivre d'un exemple non limitatif de réalisation en relation avec les dessins annexés sur lesquels :
La figure 1 est une vue schématique en perspective et partiellement en coupe d'une nappe d'enrobage conforme à l'invention ;
La figure 2 est une vue en coupe partielle agrandie de la nappe représentée à la figure 1 ;
La figure 3 est une vue schématique partielle en coupe illustrant le fourrage de blocs individuels dans une nappe selon les figures 1 et 2 ;
La figure 4 est une vue schématique en perspective illustrant la pose de la nappe d'enrobage selon les figures 1 et 2 en même temps que la conduite qu'elle protège ;
La figure 5 est une vue en coupe schématique montrant une conduite posée sur une nappe d'enrobage conforme à l'invention avant repliement de celle-ci ;
La figure 6 représente en coupe schématique une conduite munie de sa nappe d'enrobage posée au fond d'une tranchée.

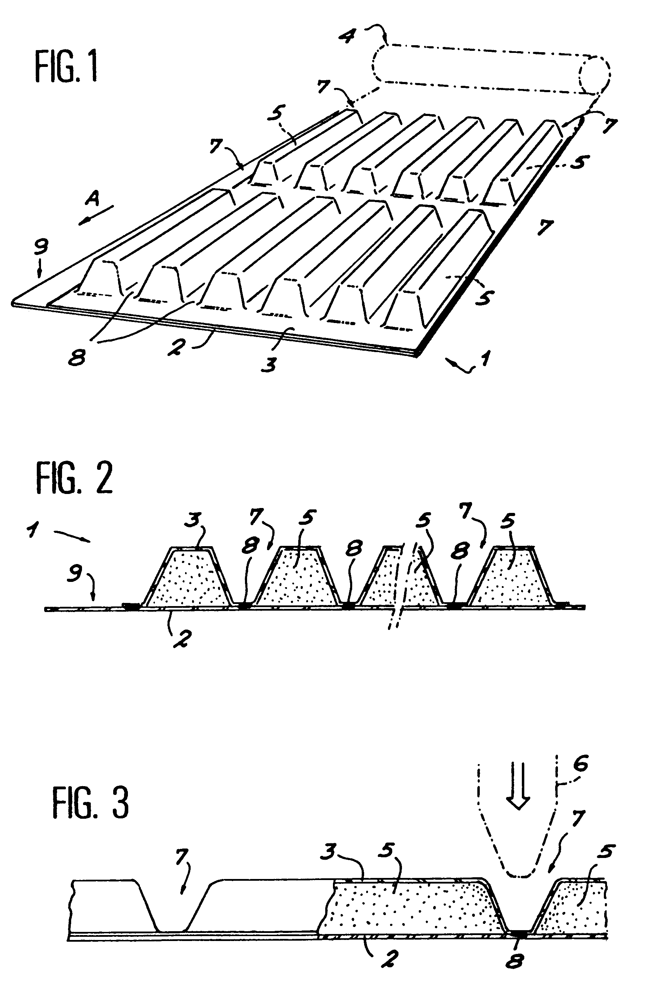

En se reportant à la figure 2, on voit une nappe 1 de matériau d'enrobage préfabriqué selon l'invention qui est constituée par deux couches de support 2, 3 en matériau souple, une couche inférieure 2 et une couche supérieure 3.

Les deux couches de support peuvent être en tout matériau souple enroulable, par exemple en géotextile non tissé, polyane, polyéthylène, en P V C, voire même en papier, ou en textile enduits ou non.

Sur la feuille de support inférieure 2 sont déposés des cordons parallèles de matériau 5, espacés entre eux et orientés dans le sens longitudinal de la feuille 2.

Cette disposition est montrée sur la figure 1 ou pour plus de clarté la feuille supérieure 3 n'a pas été représentée.

De manière simple la feuille inférieure 2 est déroulée à partir d'une bobine 4 et, mise à plat, passe sous une pluralité de trémies (non représentées) alignées selon une rangée perpendiculaire au sens de déplacement de la feuille 2 (flèche A sur la figure 1).

Ces trémies délivrent, soit par gravité, soit sous pression, des cordons calibrés de matériau d'enrobage 5. Ce matériau sera avantageusement du sable ou du sablon ; Mais on pourrait également utiliser avantageusement tout matériau homogène compactable tel que du gravier fin, de l'argile, des déchets de polyéthylène expansé ou autres.

Une règle calibreuse, également non représentée, racle le surplus de matériau 5 en aval des trémies et donne aux cordons une forme généralement trapézoïdale en coupe. La hauteur des cordons de matériau 5, ainsi réglée est limitée au minimun nécessaire pour obtenir les caractéristiques de souplesse et de résistance aux chocs et aux déchirures requises pour la protection des conduites ou fils sur te chantier. En pratique cette hauteur sera comprise entre 2 et 5 cm mais elle pourrait être différente sans sortir du cadre de l'invention.

On obtient ainsi une pluralité de cordons de matériau 5 légèrement espacés les uns des autres disposés longitudinalement sur la feuille de support 2 dont les côtés s'étendent au-delà des cordons de matériaux.

La forme en section trapézoïdale des cordons est une forme préférentielle, mais elle pourrait être différente, par exemple semi-circulaire, sans sortir du cadre de l'invention.

L'ensemble est ensuite recouvert d'une deuxième feuille souple de support 3 qui peut être constituée du même matériau que la feuille inférieure 2 ou d'un matériau différent. Par exemple on pourrait utiliser pour la feuille inférieure 2 géotextile non tissé et pour la feuille supérieur 3 du polyane, ou toute autre combinaison.

Les feuilles de support 2 et 3 sont solidarisées entre elles par tout moyen approprié tel que couture, collage, soudure, agrafage etc le long des lignes de séparation entre les cordons de matériau 5.

Comme indiqué précédemment, la feuille supérieure 3 épouse la forme des cordons de matériau 5 sans la modifier et constitue avec la feuille inférieure 2 des enceintes closes pour ces mêmes cordons.

Les cordons sont ensuite divisés transversalement par application d'un outil 6 schématisé sur la figure 3, qui vient séparer les cordons de matériaux en blocs en forme de tronc de pyramide et appliquer le long de ces lignes de séparation 7, la feuille supérieure 3 sur la feuille inférieure 2. Ces séparations 7 entre les blocs ont en outre pour effet de stabiliser les blocs sous l'effet de compression de l'outil 6. En outre elles facilitent la mise en rouleau de la nappe obtenue.

Avantageusement la tête de l'outil 6 peut être munie de tout moyen approprié pour lier ensemble les deux feuilles 2 et 3 le long de ces lignes de séparation 7. par exemple lorsque les deux feuilles de support 2 et 3 sont en matériau thermo-fusible la tête de l'outil 6 peut être munie d'une zone chauffante pour réaliser une soudure 8 dans le fond des lignes de séparation 7.

En variante et comme précédemment la liaison entre les deux feuilles pourrait également être réalisée par couture, collage ou agrafage.

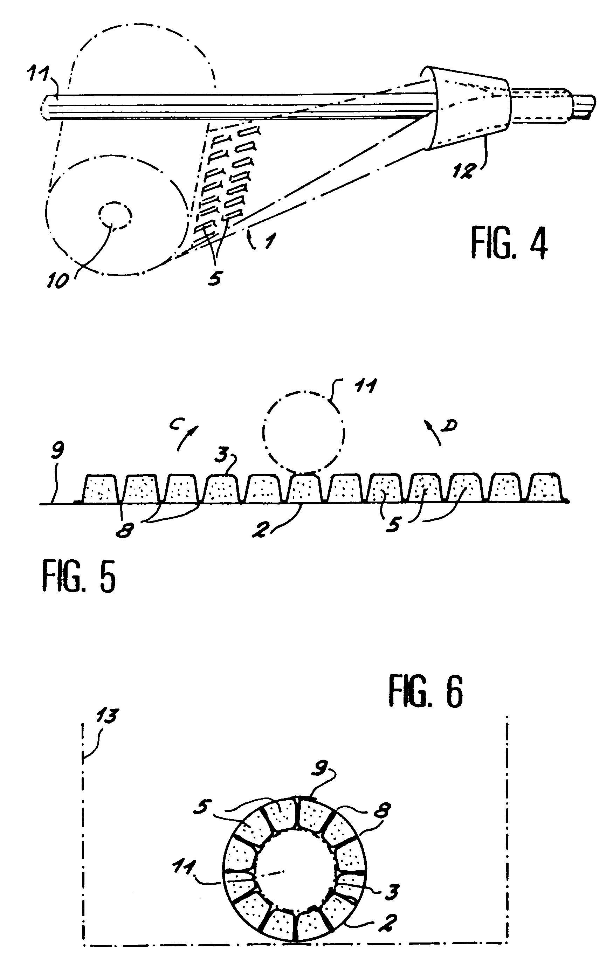

On obtient ainsi une nappe d'enrobage constituée par deux feuilles de supports souples formant des enceintes closes pour des blocs de matériau en vrac stabilisés de forme générale en tronc de pyramide ou semi-circulaire, les feuilles souples formant à la périphérie des blocs une bande d'amorçage 9 qui sert à la fermeture de la nappe sur elle-même lors de son utilisation sur chantier. Une telle nappe peut être enroulée sur un mandrin 10 (figure 4) pour former un rouleau aisément manutentionnable.

A titre indicatif, une telle nappe pourrait être fabriquée dans des largeurs allant de 25 à 50 cm en fonction du diamètre des conduites à protéger, et les rouleaux pourraient être d'une longueur de 100 à 200 mètres.

Pour la mise en place en tranchée d'une telle nappe le rouleau sera monté sur un dévidoir à l'arrière de la machine de pose du câble ou de la conduite. Le câble 11 et la nappe 1 seront simultanément tirés et passés dans un conformateur 12 en forme générale d'entonnoir comme cela est illustré schématiquement sur la figure 4. Ainsi la nappe est repliée autour du câble ou de la conduite 11, en direction des flèches C et D de la figure 5. En sortie de conformateur l'ensemble présente, en coupe, la disposition visible sur la figure 6 qui procure une protection périphérique régulière pour le câble de la conduite 11.

En sortie de conformateur l'enrobage est fixé par exemple par agrafage le long de la bande d'amorce 9 de la nappe ou par collage ou soudure de cette bande sur la nappe.

L'ensemble est ensuite déposé dans le fond de la tranchée 13 (figure 6), le câble ou la conduite 11 étant parfaitement protégé par la nappe 1. La tranchée peut alors être comblée et refermée sans apport de remblai supplémentaire.

Le fractionnement des cordons le long des lignes transversales de séparation 7 permet de faciliter l'enroulement de la nappe sur son mandrin porteur.

Toutefois on peut en variante fabriquer des nappes dans lesquelles les cordons ne seront pas fractionnés en blocs comme dans l'exemple de réal isation ci-dessus décrit.

Dans ce cas te matériau de remplissage devra être enserré entre les deux feuilles de la nappe de manière a obtenir une compacité suffisante pour éviter tout fluage longitudinal. En outre la bande devra être enroulée sur des mandrins de diamètre plus élevé.

## Revendications

1. Nappe d'enrobage d'une conduite ou d'un câble destiné à être posé dans une tranchée, constituée par deux feuilles de support souples (2, 3) solidarisées entre elles de manière à former des enceintes closes pour des cordons de sable, sablon ou autres matériaux analogues (5) disposés longitudinalement dans le sens de déroulement des feuilles (2, 3).

2. Nappe d'enrobage selon la revendication 1 caractérisée en ce que les feuilles de support (2, 3) sont en géotextile non tissé et/ou en polyane.

3. Nappe d'enrobage selon la revendication 1 ou 2 caractérisée en ce que les cordons de matériau (5) sont divisés en blocs individuels, le long de lignes de séparation transversales (7).

4. Nappe d'enrobage selon l'une quelconque des revendications 1 à 3 caractérisée en ce que les cordons de matériau (5) ont, en section, une forme trapézoïdale.

5. Nappe d'enrobage selon l'une quelconque des revendications 1 à 4 caractérisée en ce qu'elle comporte à sa périphérie une bande d'amorçage (9).

6. Procédé de fabrication d'une nappe d'enrobage selon l'une quelconque des revendications 1 à 5 comportant les étapes suivantes:
- on déroule une feuille de matière souple (2) telle qu'un géotextile non tissé, un polyane ou tout autre support similaire ;
- on dépose sur cette feuille des cordons parallèles de matériau (5) en vrac tel que du sable, du sablon, ou des déchets de polyéthylène expansé, longitudinalement dans le sens de déroulement de la feuille ;
- on recouvre les cordons de matériau (5) par une deuxième feuille souple (3), par exemple un film de polyéthylène ou de polyane, de telle sorte qu'elle vienne épouser la forme des cordons sans la modifier ;
- on solidarise ensemble les feuilles inférieure et supérieure le long des lignes de séparation entre les cordons.

7. Procédé selon la revendication 6 caractérisé en ce que l'on applique en outre sur les cordons de matériau (5) perpendiculairement au sens de déroulement des feuilles (2, 3), un outil diviseur qui fragmente les cordons en blocs individuels.

## Claims

1. Wrapping sheet for a pipe or cable intended to be placed in a trench, comprised of two flexible support sheets (2, 3) firmly fixed to each other in such a way as to form closed casings for bars of sand, fine sand or other similar materials (5) disposed longitudinally in the direction in which the sheets (2, 3) unwind.

2. Wrapping sheet according to claim 1, characterised in that the support sheets (2, 3) are of non-woven geotextile and/or polyane.

3. Wrapping sheet according to claim 1 or 2, characterised in that the bars of material (5) are divided into individual blocks along transverse separation lines (7).

4. Wrapping sheet according to any of claims 1 to 3, characterised in that the bars of material (5) are of a trapezoidal shape in cross section.

5. Wrapping sheet according to any of claims 1 to 4, characterised in that it comprises a closure band (9) on its periphery.

6. Process for producing a wrapping sheet according to any of claims 1 to 5 comprising the following steps:
- a sheet of flexible material (2), such as a non-woven geotextile, a polyane or other similar support is unwound;
- parallel bars of material (5), loose such as sand, fine sand or scraps of expanded polyethylene, are placed onto this sheet longitudinally in the direction in which the sheet unwinds;
- the bars of material (5) are covered by a second flexible sheet (3), for example, a film of polyethylene or polyane, so that it takes on the shape of the bars without changing it;
- the lower and upper sheets are firmly fixed together along the separation lines between the bars.

7. A process according to claim 6, characterised in that a dividing tool which divides the bars into individual blocks is further applied to the bars of material (5) perpendicularly to the direction in which the sheets (2, 3) unwind.

## Patentansprüche

1. Schutzmantel für eine in einen Graben zu verlegende Leitung oder ein Kabel, der aus zwei biegsamen Trägerbahnen (2, 3) besteht, die miteinander in der Weise verbunden sind, daß geschlossene Zellen für Streifen aus grobem oder feinem Sand oder aus einem analogen Material (5) gebildet werden, die längs in Abrollrichtung der Trägerbahnen (2, 3) angeordnet sind.

2. Schutzmantel nach Anspruch 1, **dadurch gekennzeichnet**, daß die Trägerbahnen (2, 3) aus nicht gewebten Geofasern und/oder aus Polyane bestehen.

3. Schutzmantel nach Anspruch 1 oder 2, **dadurch gekennzeichnet**, daß die Streifen des Materials (5) in einzelne Blöcke unterteilt sind, die sich längs der querlaufenden Trennungslinien (7) erstrecken.

4. Schutzmantel nach einem der Ansprüche 1 bis 3, **dadurch gekennzeichnet**, daß die Streifen des Materials (5) im Querschnitt Trapezform aufweisen.

5. Schutzmantel nach einem der Ansprüche 1 bis 4, **dadurch gekennzeichnet**, daß er an seinem Rand einen Überlappungsstreifen (9) aufweist.

6. Verfahren zur Herstellung eines Schutzmantels nach einem der Ansprüche 1 bis 5, welches folgende Verfahrensschritte aufweist:
- es wird eine Trägerbahn (2) aus biegsamem Material wie nicht gewebte Geofasern oder Polyane oder jedem anderen ähnlichen Träger abgewickelt;
- es werden auf diese Trägerbahn parallele Streifen aus dem losen Material (5), z. B. aus grobem oder feinem Sand oder aus Abfällen von expandiertem Polyethylen, in Längsrichtung entsprechend der Abrollrichtung der Trägerbahn aufgelegt;
- die Streifen aus dem Material (5) werden mit einer zweiten biegsamen Trägerbahn (3) abgedeckt, beispielsweise mit einer Bahn aus Polyetylen oder aus Polyane, und zwar in der Weise, daß sie die Form der Streifen, ohne diese zu verändern, annimmt;
- die untere und die obere Trägerbahn werden in Längssrichtung miteinander verbunden, wobei die Trennungslinien zwischen den Streifen entstehen.

7. Verfahren nach Anspruch 6, **dadurch gekennzeichnet**, daß zusätzlich an den Streifen aus dem Material (5), senkrecht zu der Abwickelrichtung der Trägerbahnen (2, 3), ein Trennwerkzeug zum Einsatz gebracht wird, welches die Streifen in einzelne Blocks unterteilt.
